# EUROPÄISCHE PATENTSCHRIFT

(11) **EP 3 743 191 B1**
(45) Veröffentlichungstag und Bekanntmachung des Hinweises auf die Patenterteilung: **06.10.2021**
(21) Anmeldenummer: 19700336.1
(22) Anmeldetag: 04.01.2019
(51) Int. Cl.: B01D 46/00, B01D 46/24, B01D 50/00

(54) **FILTEREINRICHTUNG MIT EINEM FILTERELEMENT IN EINEM FILTERGEHÄUSE**
FILTER DEVICE COMPRISING A FILTER ELEMENT IN A FILTER HOUSING
DISPOSITIF DE FILTRATION COMPRENANT UN ÉLÉMENT FILTRANT DANS UN BOÎTIER DE FILTRE

(30) Priorität: 24.01.2018 DE 102018000543
(43) Veröffentlichungstag der Anmeldung: 02.12.2020
(73) Patentinhaber: MANN+HUMMEL GmbH, 71636 Ludwigsburg (DE)
(72) Erfinder: RIEGER, Mario, 71638 Ludwigsburg (DE); PEREIRA MADEIRA, Pedro Miguel, 74321 Bietigheim-Bissingen (DE); KUNZE, Stefan, 72076 Tübingen (DE); DEHNEN, Ulrich, 70806 Kornwestheim (DE); STÜRNER, Johannes, 1018 AC Amsterdam (NL); BEYLICH, Markus, 71636 Ludwigsburg (DE)
(74) Vertreter: Mann + Hummel Intellectual Property
(86) Internationale Anmeldenummer: PCT/EP2019/050172
(87) Internationale Veröffentlichungsnummer: WO 2019/145135

(56) Entgegenhaltungen:
- EP-A1- 1 849 555
- EP-A1- 3 085 428
- US-A- 4 227 898
- US-B1- 7 001 440

## Beschreibung

### Technisches Gebiet

Die Erfindung bezieht sich auf eine Filtereinrichtung mit einem Filterelement in einem Filtergehäuse nach dem Oberbegriff des Anspruches 1.

### Stand der Technik

In EP 1 849 555 A1 wird ein Staubsammelbehälter eines Elektrowerkzeugs mit einem Filterelement mit Leitelementen beschrieben. In US 7 001 440 B1 wird ein Luftfilterelement mit einem ringförmigen Filtermedium beschrieben, welches eine Hülle mit geneigten Finnen aufweist. In EP 3 085 428 A1 wird eine Filteranordnung beschrieben, mit einem Gehäusedeckel, der Leitelemente aufweist. In US 4 227 898 A wird ein Luftfilter mit einer Endscheibe beschrieben, die eine Trennwand mitbildet.

In US 3,816,982 wird ein Luftfilter mit einem hohlzylindrischen Filterelement in einem aufnehmenden Filtergehäuse beschrieben. Die zu filtrierende Luft wird über eine seitlich im Filtergehäuse angeordnete Einströmöffnung eingeleitet, die dem Filterelement axial vorgelagert ist, und durchströmt anschließend das Filterelement radial von außen nach innen. Das Filterelement weist an seinen gegenüberliegenden Stirnseiten eine offene und eine geschlossene Endscheibe auf. Die gereinigte Luft wird axial aus dem Innenraum des hohlzylindrischen Filterelementes über die offene Endscheibe abgeleitet.

In DE 10 2013 015 052 A1 wird eine Filtereinrichtung zur Reinigung eines Gasstroms beschrieben, die ein hohlzylindrisches Filterelement und einen ebenfalls hohlzylindrischen Vorabscheider umfasst, der das Filterelement umgreift und an dessen Außenseite über den Umfang verteilt Leitschaufeln angeordnet sind. Der zugeführte Gasstrom erfährt an den Leitschaufeln eine Umlenkung und Beschleunigung, was zur Abscheidung von groben Verunreinigungen wie Schmutz und Staubpartikeln führt.

DE 10 2010 049 411 A1 offenbart betrifft ein Filterelement für ein Lufteinlasssystem mit einem Filtermediumkörper zum Reinigen von Rohluft. Der Filtermediumkörper ist als Hohlkörper mit langgestreckter Querschnittsform ausgebildet und weist an seinen axialen Stirnseiten Endscheiben auf. Entlang einer Schmalseite des Filtermediumkörpers sind axial verteilt Leitschaufeln angeordnet, die zur Strömungsführung im Anströmbereich dienen.

### Offenbarung der Erfindung

Der Erfindung liegt die Aufgabe zugrunde, eine Filtereinrichtung mit einem Filterelement, das einen ringförmigen Filtermediumkörper aufweist, mit einfachen konstruktiven Maßnahmen in der Weise auszubilden, dass Schmutzpartikel aus dem zu filtrierenden Fluidstrom noch vor der Durchströmung des Filtermediumkörpers effektiv abgeschieden werden.

Diese Aufgabe wird erfindungsgemäß mit den Merkmalen des Anspruches 1 gelöst. Die Unteransprüche geben zweckmäßige Weiterbildungen an.

Die erfindungsgemäße Filtereinrichtung umfasst ein Filtergehäuse und ein in dem Filtergehäuse aufgenommenes Filterelement mit einem ringförmigen Filtermediumkörper, an dem die Filtration eines zu reinigenden Fluids stattfindet. Die Filtereinrichtung wird insbesondere zur Gasfiltration verwendet, beispielsweise zur Filtration der einer Brennkraftmaschine zuzuführenden Verbrennungsluft. Im Prinzip kommt aber auch eine Anwendung für flüssige Fluide in Betracht.

Der ringförmige Filtermediumkörper des Filterelementes wird in Radialrichtung von dem zu reinigenden Fluid durchströmt, insbesondere radial von außen nach innen, so dass die Außenseite des Filtermediumkörpers die Anström- bzw. Rohseite und die innenliegende Seite die Reinseite bildet. Grundsätzlich kommt auch eine umgekehrte Durchströmung des Filtermediumkörpers radial von innen nach außen in Betracht. Der Filtermediumkörper ist insbesondere ringförmig geschlossen ausgebildet und weist einen innenliegenden Strömungsraum zur Aufnahme des Fluids auf. Bei einer Durchströmung des Filtermediumkörpers radial von außen nach innen wird das gereinigte Fluid aus dem innenliegenden Strömungsraum axial abgeleitet.

Eine Stirnseite des Filtermediumkörpers ist mit einer geschlossenen Endscheibe versehen, die den innenliegenden Strömungsraum an dieser Stelle axial verschließt. Benachbart zu einer Endscheibe an einer Stirnseite des Filtermediumkörpers sind mehrere Leitschaufeln angeordnet, die sich radial zur Längsachse des Filterelementes über die Außenkontur der Endscheibe hinaus erstrecken und in einen Strömungsweg hineinragen, der der Anströmseite des Filtermediumkörpers vorgelagert ist.

Die Leitschaufeln befinden sich vorzugsweise benachbart zu der geschlossen ausgeführten Endscheibe am Filtermediumkörper. Zusätzlich oder alternativ ist es auch möglich, benachbart zu einer axial gegenüberliegenden, offenen Endscheibe Leitschaufeln anzuordnen. Über die offene Endscheibe kann Fluid aus dem innenliegenden Strömungsraum im Filtermediumkörper axial abgeleitet werden oder, bei einer radialen Durchströmung des Filtermediumkörpers von innen nach außen, in den innenliegenden Strömungsraum axial eingeleitet werden.

Die Leitschaufeln ragen abschnittsweise in einen ringförmig umlaufenden Strömungsweg hinein, der zwischen der Außenkontur der Endscheibe und der Innenseite einer Gehäusewand des aufnehmenden Filtergehäuses gebildet ist. Der ringförmig umlaufende Strömungsweg folgt der Außenkontur der Endscheibe, die die gleiche Querschnittsgeometrie wie der Filtermediumkörper aufweist.

Die Leitschaufeln erstrecken sich in Umfangsrichtung nicht über den gesamten ringförmig umlaufenden Strömungsweg, sondern ragen nur über einen Teil des Umfanges des Strömungswegs in diesen hinein. Ein weiterer Teil des Umfanges des Strömungswegs ist von einer Blende abgedeckt, die an dieser Stelle eine Durchströmung von dem Fluid verhindert. Die Blende zwingt das Fluid zu einer Durchströmung des Strömungswegs in dem nicht von der Blende abgedeckten Teil, in welchen die Leitschaufeln hineinragen. Die Fluidströmung erfährt durch die Reduzierung des freien, für die Durchströmung zur Verfügung stehenden Querschnittes eine Strömungsbeschleunigung. Außerdem wird der Fluidströmung noch vor dem Passieren des ringförmig umlaufenden Strömungswegs ein Drall aufgeprägt, der die Abscheidung mitgeführter Schmutzpartikel im Fluid an der Innenseite der Gehäusewand des Filtergehäuses unterstützt. Die Blende erstreckt sich vorteilhafterweise über einen signifikanten Teil des ringförmig umlaufenden Strömungswegs, beispielsweise über mindestens 10 % oder 20 % der Länge des Strömungswegs in Umfangsrichtung.

Der ringförmige Filtermediumkörper des Filterelementes weist, gemäß einer weiteren vorteilhaften Ausführung, eine langgestreckte Querschnittsform auf. Der innenliegende Strömungsraum ist von Längs- und Schmalseiten des Filtermediumkörpers umschlossen. Die Querschnittsform des Filtermediumkörpers kann oval oder ovalisiert sein. Es kommen auch nicht-ovale, längsgestreckte Querschnittsformen in Betracht, beispielsweise konkav gekrümmte Längsseiten oder geradflächige, ebene Längsseiten oder nicht-oval gekrümmte, konvexe Längsseiten. Die Erstreckung der Längsseiten ist größer als die Erstreckung der Schmalseiten; es kann beispielsweise zweckmäßig sein, dass die Erstreckung der Längsseiten mindestens doppelt so groß ist wie die Erstreckung der Schmalseiten. Die Schmalseiten sind beispielsweise mit einer halbkreisförmigen Querschnittsform versehen.

Die langgestreckte Querschnittsform des Filtermediumkörpers bzw. des Filterelementes hat den Vorteil, dass verhältnismäßig niedrig bauende Einbauräume genutzt werden können. Außerdem ist eine große Anströmfläche an den Längsseiten des Filtermediumkörpers gegeben, an der gleiche oder ähnliche Strömungsverhältnisse herrschen.

Alternativ zu einer längsgestreckten, ringförmigen Querschnittsform ist es auch möglich, dass der Filtermediumkörper eine kreisrunde Querschnittsform aufweist.

Bei einer langgestreckten Querschnittsform des Filtermediumkörpers bzw. des Filterelementes kann es zweckmäßig sein, dass die Blende eine Schmalseite des ringförmigen Strömungswegs abdeckt. Die gegenüberliegende Schmalseite sowie die Längsseiten oder der größere Teil der Längsseiten sind dagegen blendenfrei; in diese Teile des Strömungswegs können die Leitschaufeln hineinragen, wobei ein oder mehrere Abschnitte des Strömungswegs ohne Blende ggf. auch vollständig frei von Leitschaufeln sein können.

Auch bei einer kreisrunden Querschnittsform des Filtermediumkörpers wird ein signifikanter Anteil des ringförmig umlaufenden Strömungswegs an der Außenkontur der Endscheibe des Filterelementes von der Blende abgedeckt. Die Blende kann sich beispielsweise über ein Winkelsegment bis maximal 180°, maximal 120°, maximal 90°, maximal 60°, maximal 45° oder kleiner als 45° erstrecken.

Gemäß noch einer weiteren zweckmäßigen Ausführung ist in das Filtergehäuse stromauf des Filterelementes eine Einströmöffnung eingebracht, über die das zu reinigende Fluid eingeleitet wird. Die Einströmöffnung kann gegenüber der Längsachse des Filterelementes im Filtergehäuse seitlich bzw. radial versetzt angeordnet sein. In bevorzugter Ausführung befinden sich die Einströmöffnung und die Blende im umlaufenden Strömungsweg an der Außenkontur der Endscheibe des Filterelementes auf der gleichen Seite. Somit ist das über die Einströmöffnung in das Filtergehäuse einströmende Fluid gezwungen, an der Blende, welche im Strömungsweg zwischen der Einströmöffnung und dem Filtermediumkörper liegt, vorbeizuströmen. Hierbei wird das Fluid teilweise an der Blende abgelenkt und in Richtung des freiliegenden Strömungswegs sowie der darin angeordneten Leitschaufeln geführt, die die Fluidströmung beeinflussen.

Diese wird insbesondere mit einem Drall versetzt, was die Abscheidung von in dem Fluid mitgeführten Schmutzpartikeln begünstigt. Die mit einem Drall versetzte Fluidströmung beginnt insbesondere in Umfangsrichtung zu zirkulieren, wodurch die mitgeführten Schmutzpartikel im Fluid nach außen getragen werden und sich an der Innenseite einer Gehäusewand absondern können. Bei dieser Gehäusewand handelt es sich insbesondere um die Außenwand eines das Filterelement aufnehmenden Filtergehäuses.

Vorteilhafterweise sind die Leitschaufeln gleichmäßig über den nicht von der Blende bedeckten Umfang der Endscheibe verteilt. Alternativ hierzu ist es auch möglich, eine nicht-gleichmäßige

Verteilung der Leitschaufeln vorzusehen, indem beispielsweise ein Abschnitt entlang des blendenfreien Umfangs der Endscheibe frei von Leitschaufeln bleibt und einen freien Strömungsquerschnitt an dieser Stelle bildet. Auf diese Weise kann zusätzlich Einfluss auf die der Anströmseite des Filtermediumkörpers zuzuführende Fluidströmung genommen werden.

Die Leitschaufeln können am Filterelement befestigt sein, insbesondere an der Endscheibe, benachbart zu der sich die Leitschaufeln radial nach außen erstrecken. Es kann vorteilhaft sein, die Leitschaufeln so auszubilden, dass die freie Stirnseite der Leitschaufeln mit axialem Abstand zur Endscheibe liegt, beispielsweise in Richtung des Filtermediumkörpers axial zur Endscheibe versetzt oder in Gegenrichtung axial von der Endscheibe weiter entfernt ist und somit axial außerhalb des Filtermediumkörpers liegt. Gemäß einer weiteren zweckmäßigen Ausführung liegen die Leitschaufeln axial zumindest annähernd in gleicher Höhe wie die Endscheibe.

Alternativ zu einer Befestigung der Leitschaufeln an der Endscheibe ist es auch möglich, die Leitschaufeln an einem sonstigen Bauteil des Filterelementes zu befestigen, beispielsweise an einem Stützgerüst, mit dem der Filtermediumkörper insbesondere an seiner Innenseite ausgekleidet sein kann. Des Weiteren ist es möglich, die Leitschaufeln am Filtergehäuse anzuordnen.

Das Filterelement und der Filtermediumkörper können über die axiale Länge - bezogen auf die Längsachse des Filterelementes - eine nicht-konstante Querschnittsfläche aufweisen, die sich von einer Stirnseite zur gegenüberliegenden Stirnseite ändert. Beispielsweise wächst die Querschnittsfläche von der geschlossenen Endscheibe zur gegenüberliegenden, offenen Endscheibe an.

Alternativ zu einer nicht-konstanten Querschnittsfläche sind auch Filterelemente bzw. Filtermediumkörper mit über die Länge konstanter Querschnittsfläche möglich, zum Beispiel in Form eines Hohlzylinders mit kreisrundem oder nicht-rundem Querschnitt.

Gemäß einer weiteren vorteilhaften Ausführung weisen eine oder mehrere Leitschaufeln einen gekrümmten Strömungsleitabschnitt auf. Der gekrümmte Strömungsleitabschnitt versetzt der auftreffenden Fluidströmung einen gewünschten Drall. Bei einer Ausführung des Filtermediumkörpers mit langgestreckter Querschnittsform befinden sich die Leitschaufeln mit dem gekrümmten Strömungsleitabschnitt vorteilhafterweise im Bereich der Schmalseite des Filtermediumkörpers.

Gemäß einer weiteren vorteilhaften Ausführung weisen eine oder mehrere Leitschaufeln einen geradlinigen oder zumindest annähernd geradlinigen Strömungsleitabschnitt auf. Dieser befindet sich, bei einer Ausführung des Filtermediumkörpers mit langgestreckter Querschnittsform, vorzugsweise an den Längsseiten des Filtermediumkörpers. Der geradlinige und zumindest annähernd geradlinige Strömungsleitabschnitt schließt sich insbesondere an einen Befestigungsabschnitt der Leitschaufel an, über den die Leitschaufel am Filterelement befestigt ist. Zwischen dem Strömungsleitabschnitt und dem Befestigungsabschnitt der Leitschaufel liegt vorzugsweise ein Winkel zwischen 10° und 80°, beispielsweise zwischen 30° und 60°.

Die Blende ist am Filterelement an der Endscheibe angeordnet.

Sowohl die Blende als auch die Leitschaufeln sind an der Endscheibe, insbesondere an der geschlossenen Endscheibe angeordnet.

Die Erfindung bezieht sich des Weiteren auf das Filterelement der vorbeschriebenen Filtereinrichtung, wobei das Filterelement in die vorbeschriebene Filtereinrichtung einsetzbar ist. Das Filterelement weist einen ringförmigen Filtermediumkörper mit einer Endscheibe an einer Stirnseite des Filtermediumkörpers auf. An dem Filterelement ist eine radial sich nach außen erstreckende Blende angeordnet, die sich über einen Teil des Umfangs der Endscheibe erstreckt. Der weitere Teil des Umfangs an der Endscheibe ist dagegen frei von der Blende und bildet einen Strömungsweg für das Fluid, das dem Filtermediumkörper für die Filtration zuzuführen ist.

In einer weiteren vorteilhaften Ausführung ist der Filtermediumkörper faltenförmig ausgebildet, wobei die Längserstreckung der Filterfalten in Achsrichtung - bezogen auf die Längsachse des Filterelements - verläuft.

Gemäß einer vorteilhaften Ausführung befindet sich an der Anströmseite des Filtermediumkörpers ein strömungsdichtes Separierungselement, das sich über eine Teilfläche des Filtermediumkörpers erstreckt. Das strömungsdichte Separierungselement verhindert oder reduziert zumindest eine Anströmung des Filtermediumkörpers in diesem Abschnitt, wodurch eine Strömungsberuhigung des Rohfluids an der Anströmseite des Filtermediumkörpers erreicht wird.

Das Separierungselement ist beispielsweise als eine Beruhigungswand oder als eine Separierungsfolie ausgebildet und verhindert, dass an der Anströmseite das zu reinigende Fluid an der Position des Separierungselementes unmittelbar durch den Filtermediumkörper strömt. Das in Richtung der Anströmseite geleitete, ungereinigte Rohfluid wird an einem unmittelbaren Hindurchströmen des Filtermediumkörpers an der Position des Separierungselementes gehindert und ist daher gezwungen, sich in dem Raum an der Anströmseite des Filtermediumkörpers für einen zumindest geringfügig längeren Zeitraum aufzuhalten, was mit einer Strömungsberuhigung einhergeht. Im Anschluss hieran kann das ungereinigte Fluid den Filtermediumkörper durchströmen. Die Strömungsberuhigung hat zur Folge, dass größere Schmutzpartikel, die im Rohfluid mitgeführt werden, sich in dem der Anströmseite des Filtermediumkörpers vorgelagerten Raum absetzen können. Es findet somit eine Vorabscheidung statt, wobei die abgeschiedenen Partikel vorteilhafterweise über ein Austragventil aus dem Filtergehäuse abgeleitet werden können. Aufgrund der Vorabscheidung ist die Schmutzbelastung des Filtermediumkörpers reduziert.

Gemäß einer vorteilhaften Ausführung befindet sich das Separierungselement am Filtergehäuse, in welchem das Filterelement mit dem Filtermediumkörper aufgenommen ist. Das Separierungselement kann ggf. einteilig mit dem Filtergehäuse ausgebildet sein. Es handelt sich beispielsweise bei dem Separierungselement um eine Beruhigungswand, welche den Filtermediumkörper ringförmig umschließt und einen Abstand zur Außenseite des Filtermediumkörpers aufweist.

Gemäß einer weiteren vorteilhaften Ausführung ist das Separierungselement unmittelbar an dem Filterelement angeordnet, beispielsweise auf die Außenseite des Filtermediumkörpers aufgebracht. Bei dem Separierungselement handelt es sich zum Beispiel um eine Separierungsfolie, welche unmittelbar auf die Außenseite des Filtermediumkörpers aufgebracht ist. Im Bereich der Separierungsfolie ist keine unmittelbare radiale Anströmung des Filtermediumkörpers möglich. In einer faltenförmigen Ausführung des Filtermediumkörpers liegt die Separierungsfolie auf den Außenkanten der Filterfalten auf, wobei entlang der Längserstreckung der Filterfalten eine Ausbreitung von Rohfluid an der Anströmseite möglich ist. Auf diese Weise kann Rohfluid, welches an einer Stelle des Filtermediumkörpers ohne derartige Separierungsfolie radial eintritt, entlang der Längserstreckung der Falten axial bis in den Bereich geführt werden, in welchem sich die Separierungsfolie befindet, woraufhin der Filtermediumkörper auch in diesem Abschnitt radial durchströmt wird. Auf diese Weise kann auch der Abschnitt des Filtermediumkörpers für die Filtration genutzt werden, der von der Separierungsfolie abgedeckt ist.

In einer weiteren vorteilhaften Ausführung ist es sowohl möglich, ein Separierungselement in Form einer gehäuseseitigen Beruhigungswand als auch ein weiteres Separierungselement in Form einer filterelementseitigen Separierungsfolie vorzusehen. Diese beiden Separierungselemente befinden sich insbesondere an axial gegenüberliegenden Seiten des Filtermediumkörpers des Filterelements.

In jedem Fall ist es zweckmäßig, dass das Separierungselement - oder die Summe sämtlicher Separierungselemente - sich nur über eine Teilfläche an der Anströmseite des Filtermediumkörpers erstrecken, so dass ein weiterer Teilabschnitt an der Anströmseite des Filtermediumkörpers frei von einem derartigen Separierungselement bleibt.

Gemäß noch einer weiteren vorteilhaften Ausführung erstreckt sich das Separierungselement von einer axialen Stirnseite des Filtermediumkörpers ausgehend in Achsrichtung sowie vollständig in Umfangsrichtung des Filtermediumkörpers. Die axiale Erstreckung des Beruhigungselementes ist jedoch in jedem Fall kleiner als die axiale Gesamtlänge des Filtermediumkörpers, so dass ein Teilabschnitt des Filtermediumkörpers frei von dem Separierungselement bleibt. Vorteilhafterweise ist die axiale Erstreckung eines Separierungselementes maximal so groß wie die halbe axiale Gesamtlänge des Filtermediumkörpers, beispielsweise nur maximal so groß wie ein Drittel der axialen Gesamtlänge des Filtermediumkörpers.

Im Fall einer Separierungsfolie als Separierungselement ist es zweckmäßig, dass die Separierungsfolie fest mit dem Filtermediumkörper verbunden ist, beispielsweise durch Aufkleben oder durch Verschweißen.

### Kurze Beschreibung der Zeichnungen

Weitere Vorteile und zweckmäßige Ausführungen sind den weiteren Ansprüchen, der Figurenbeschreibung und den Zeichnungen zu entnehmen.

Es zeigen:

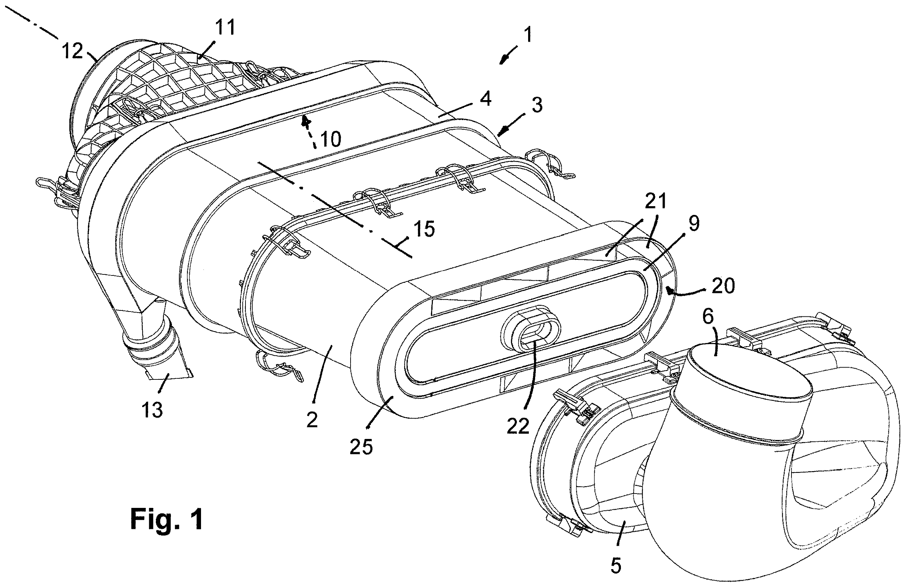

- Fig. 1: in perspektivischer Explosionsdarstellung eine Filtereinrichtung als Luftfilter für eine Brennkraftmaschine, mit einem Filterelement mit langgestreckter Querschnittsform in einem Filtergehäuse und mit Leitschaufeln im Strömungsweg zwischen einer Einströmöffnung im Filtergehäuse und einem Filtermediumkörper des Filterelements, wobei ein Teil des Strömungswegs von einer Blende abgedeckt ist,

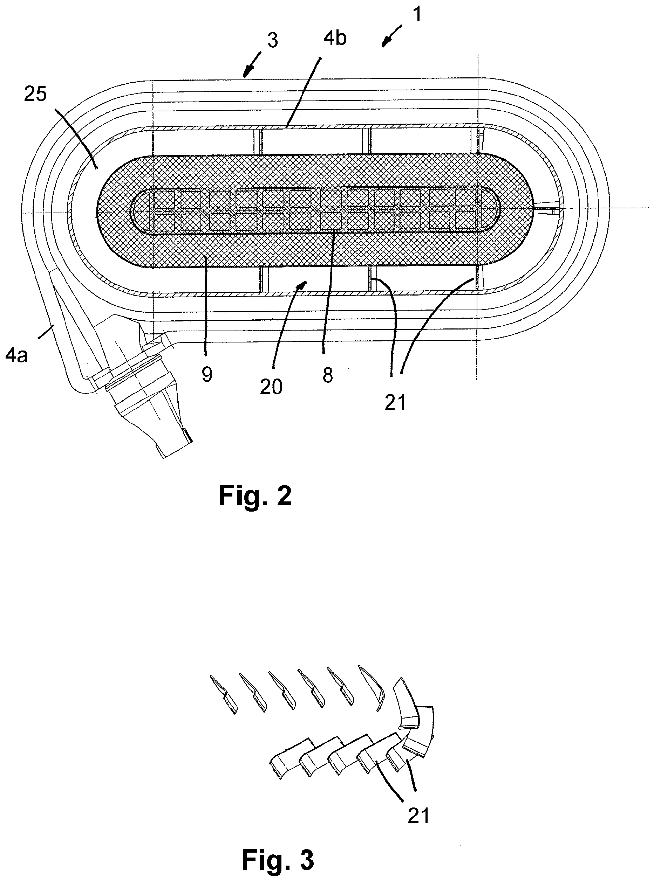

- Fig. 2: das Ausführungsbeispiel aus Fig. 1 im Schnitt quer zur Längsachse des Filterelements,
- Fig. 3: mehrere Leitschaufeln in perspektivischer Ansicht,
- Fig. 4: eine als Luftfilter ausgeführte Filtereinrichtung in einer Ausführungsvariante.

In den Figuren sind gleiche Bauteile mit gleichen Bezugszeichen versehen.

### Ausführungsformen der Erfindung

In dem gezeigten Ausführungsbeispiel ist eine Filtereinrichtung 1 dargestellt, die als Luftfilter im Ansaugtrakt einer Brennkraftmaschine zur Filtration der den Zylindern der Brennkraftmaschine zuzuführenden Verbrennungsluft ausgebildet ist. Die Filtereinrichtung 1 umfasst ein Filterelement 2, das eine langgestreckte Querschnittsform besitzt und in einem Filtergehäuse 3 mit einem Filtergrundgehäuse 4 und einem vorgelagerten Einlassgehäuse 5 angeordnet ist. Das Filtergrundgehäuse 4 nimmt das Filterelement 2 auf. In dem Einlassgehäuse 5, das mit dem Filtergrundgehäuse 4 zu verbinden ist, befindet sich eine seitlich angeordnete Einströmöffnung 6, über die die Verbrennungsluft in das Filtergehäuse 3 eingeführt und in Richtung des Filterelementes 2 geleitet wird. Bezogen auf eine Mittellängsachse 15 des Filterelementes 2 liegt die Einströmöffnung 6 seitlich bzw. radial verschoben, wobei die Einströmachse der Einströmöffnung 6 unter einem Winkel von annähernd 90° zur Mittellängsachse 15 des Filterelementes 2 steht.

Das Filterelement 2 weist einen Filtermediumkörper 7 auf, der ringförmig geschlossen ausgebildet und mit einer langgestreckten Querschnittsform versehen ist. Der Filtermediumkörper 7 wird bezogen auf die Mittellängsachse 15 radial von außen nach innen von dem zu filtrierenden Fluid - der Verbrennungsluft - durchströmt, so dass die Außenseite des Filtermediumkörpers 7 die Roh- oder Anströmseite und die Innenseite die Reinseite bildet. Der Filtermediumkörper 7 ist an seiner Innen- bzw. Reinseite von einem Stützgerüst 8, welches aus Kunststoff besteht, ausgekleidet. Der innenliegende Strömungsraum im Filtermediumkörper 7 bildet den Reinraum, in welchem sich das gereinigte Fluid sammelt und aus dem das gereinigte Fluid axial abgeleitet wird.

An den beiden gegenüberliegenden Stirnseiten des Filterelementes 2 ist jeweils eine Endscheibe 9, 10 angeordnet, wobei die der Einströmöffnung 6 benachbarte erste Endscheibe 9 geschlossen ausgebildet und die zweite, gegenüberliegende, der Einströmöffnung 6 abgewandte Endscheibe 10 offen ausgebildet ist, so dass das Fluid aus dem innenliegenden Reinraum axial über die offene Endscheibe 10 abströmen kann. An das Filtergrundgehäuse 4 schließt sich benachbart zur offenen Endscheibe 10 des Filterelementes 2 ein gehäuseseitiger Auslassabschnitt 11 mit einer Abströmöffnung 12 an, über die das gereinigte Fluid aus der Filtereinrichtung 1 abgeleitet wird.

Die Querschnittsform des Filterelementes 2 bzw. des Filtermediumkörpers 7 ist langgestreckt, wobei die Längsseiten eben und parallel zueinander verlaufen und über gekrümmte Schmalseiten verbunden sind. Die Erstreckung der Längsseiten ist mindestens doppelt so groß wie die von den Schmalseiten überbrückte Distanz, also dem Abstand zwischen den beiden Längsseiten. Das Filterelement 1 und der Filtermediumkörpers 7 weisen über die axiale Länge - bezogen auf die Mittellängsachse 15 - eine nicht-konstante Querschnittsfläche auf, die im Bereich der geschlossenen Endscheibe 9 kleiner ist als im gegenüberliegenden Bereich mit der offenen Endscheibe 10 und von der kleineren zur größeren Querschnittsfläche kontinuierlich und gleichmäßig anwächst.

Benachbart zu dem gehäuseseitigen Auslassabschnitt 11 ist am Filtergrundgehäuse 4 ein Austragventil 13 angeordnet, über das abgelagerte Schmutzpartikel aus dem Filtergehäuse abgeleitet werden können.

An der Außenseite der geschlossenen Endscheibe 9 ist ein mittig platziertes Stützauge 22 angeformt, mit dem das Filterelement 2 von außen axial abgestützt werden kann. Hierfür ist in das Einlassgehäuse 5 eine Ausnehmung eingebracht, die axial mit dem Stützauge 22 fluchtet und das Einführen eines Stützstabes ermöglicht, der in das Stützauge 22 hineingreift.

Die über die Einströmöffnung 6 eingeleitete Verbrennungsluft strömt in Richtung eines Strömungsdurchgangs 20, der sich zwischen dem Außenumfang der geschlossenen Endscheibe 9 am Filtermediumkörper 7 und der Innenseite der Außenwand des das Filterelement 2 aufnehmenden Filtergrundgehäuses 4 befindet. In dem Strömungsdurchgang 20 sind Leitschaufeln 21 angeordnet, auf die die Verbrennungsluft, welche in Richtung des Filtermediumkörpers 7 strömt, auftrifft und einen Drall erfährt. Hierdurch wird die Luftströmung im Ringraum zwischen der Innenseite der Außenwand des Filtergrundgehäuses 4 und dem Filtermediumkörper 7 in eine zirkulierende, umlaufende Bewegung versetzt, wodurch mitgeführte Schmutzpartikel an der Innenseite der Außenwand des Gehäuses abgeschieden werden. Die abgelagerten Schmutzpartikel können über das Austragventil 13 aus dem Filtergehäuse abgeleitet werden.

Im montierten Zustand liegen die Leitschaufeln 21 vollständig innerhalb des Filtergrundgehäuses 4.

Der Strömungsweg 20, welcher sich zwischen der Außenkontur der Endscheibe 9 und der Innenseite der umschließenden Gehäusewand des Filtergrundgehäuses 4 erstreckt, ist ringförmig umlaufend ausgebildet und weist nur in einem Teil seiner Länge die Leitschaufeln 21 auf. Über einen weiteren Teil ist der Strömungsweg 20 von einer Blende 25 abgedeckt, die sich vollständig über eine Schmalseite und teilweise noch entlang einer der beiden Längsseiten erstreckt. Hierdurch wird der freie, für die Durchströmung zur Verfügung stehende Teil des Strömungswegs reduziert.

Die Blende 25 befindet sich bezogen auf die Längsachse 15 auf der gleichen Seite wie die Einströmöffnung 6 in dem Einlassgehäuse 5.

Aufgrund der Blende 25 ist das einströmende Fluid gezwungen, den freien, zur Verfügung stehenden Strömungsweg zu nehmen, in welchem sich die Leitschaufeln 21 befinden. Dementsprechend konzentriert sich die Strömung auf denjenigen Teil des Strömungswegs 20, in welchem sich die Leitschaufeln 21 befinden, wodurch der Fluidmassenstrom erhöht ist, welcher auf die Leitschaufeln 21 auftrifft bzw. zwischen benachbarten Leitschaufeln 21 den Strömungsweg 20 passiert. Die Fluidströmung wird mit einem erhöhten Drall beaufschlagt, wodurch die Abscheidung mitgeführter Schmutzpartikel verbessert wird.

Die Blende 25 kann mit dem Filterelement 2 verbunden sein, insbesondere mit der geschlossen ausgeführten Endscheibe 9. Ebenso können die Leitschaufeln 21 an dem Filterelement, insbesondere an der Endscheibe 9 angeordnet sein. Es sind jedoch auch weitere Möglichkeiten der Anordnung und Befestigung von Blende 25 und Leitschaufeln 21 möglich. So ist es beispielsweise denkbar, dass die Blende 25 an dem Filtergrundgehäuse 4 angeordnet ist und die Leitschaufeln 21 am Filterelement 2 bzw. an der Endscheibe 9. Des Weiteren sind auch Ausführungen möglich, bei denen sowohl die Blende 25 als auch die Leitschaufeln 21 am Filtergrundgehäuse 4 angeordnet sind. Schließlich kommt es auch in Betracht, dass die Blende 25 am Filterelement 2 bzw. an der Endscheibe 9 angeordnet ist und die Leitschaufeln 21 am Filtergrundgehäuse 4.

Die Leitschaufeln 21 sind fest mit der geschlossenen Endscheibe 9 verbunden und ragen in Radialrichtung über die Außenkontur der Endscheibe 9 hinaus. Vorteilhafterweise erstrecken sich die Leitschaufeln 21 bis zur Innenseite der Außenwand des aufnehmenden Filtergrundgehäuses 4.

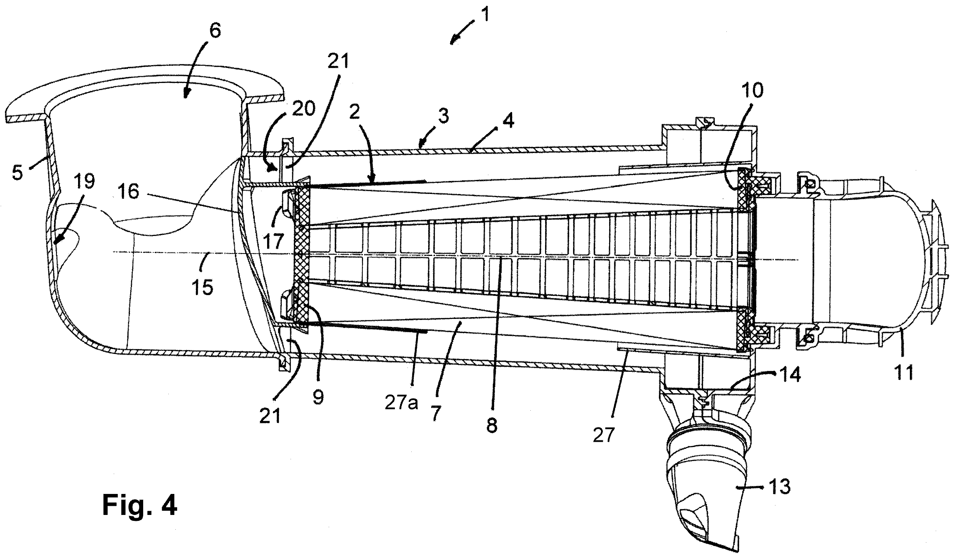

In Fig. 4 ist eine Ausführungsvariante einer als Luftfilter ausgebildeten Filtereinrichtung 1 dargestellt. Die Filtereinrichtung 1 gemäß Fig. 4 umfasst ein Filterelement 2, das hohlzylindrisch oder mit langgestreckter Querschnittsform ausgebildet und in einem Filtergehäuse 3 angeordnet ist, welches ein Filtergrundgehäuse 4 und ein vorgelagertes Einlassgehäuse 5 umfasst. Das Filtergrundgehäuse 4 und das Einlassgehäuse 5, an dem sich eine Einströmöffnung 6 befindet, sind einteilig ausgebildet. Das Filtergrundgehäuse 4 nimmt in seinem Aufnahmeraum 26 das Filterelement 2 auf. Die zu filtrierende Verbrennungsluft wird über die seitlich angeordnete Einströmöffnung 6 in das Filtergehäuse 3 eingeführt und in Richtung des Filterelementes 2 geleitet. Bezogen auf die Mittellängsachse 15 des Filterelementes 2 liegt die Einströmöffnung 6 seitlich bzw. radial verschoben, wobei die Einströmachse der Einströmöffnung 6 unter einem Winkel von annähernd 90° zur Mittellängsachse 15 des Filterelementes 2 steht.

Das Filterelement 2 weist einen Filtermediumkörper 7 auf, der ringförmig geschlossen ausgebildet und mit einer langgestreckten Querschnittsform versehen ist. Der Filtermediumkörper 7 wird bezogen auf seine Mittellängsachse 15 radial von außen nach innen von dem zu filtrierenden Fluid - der Verbrennungsluft - durchströmt, so dass die Außenseite des Filtermediumkörpers 7 die Roh- oder Anströmseite und die Innenseite die Reinseite bildet. Der Filtermediumkörper 7 ist an seiner Innen- bzw. Reinseite von einem Stützgerüst 8, welches aus Kunststoff besteht, ausgekleidet. Der innenliegende Strömungsraum im Filtermediumkörper 7 bildet den Reinraum, in welchem sich das gereinigte Fluid sammelt und aus dem das gereinigte Fluid axial abgeleitet wird.

An beiden gegenüberliegenden Stirnseiten des Filtermediumkörpers 7 ist jeweils eine Endscheibe 9, 10 angeordnet, wobei die der Einströmöffnung 6 benachbarte erste Endscheibe 9 geschlossen ausgebildet und die zweite, gegenüberliegende, der Einströmöffnung 6 abgewandte Endscheibe 10 offen ausgebildet ist, so dass das Fluid aus dem innenliegenden Reinraum axial über die offene Endscheibe 10 abströmen kann. An das Filtergrundgehäuse 4 schließt sich benachbart zur offenen Endscheibe 10 des Filterelementes 2 ein gehäuseseitiger Auslassabschnitt 11 mit einer Abströmöffnung 12 an, über die das gereinigte Fluid aus der Filtereinrichtung 1 abgeleitet wird. Der Auslassabschnitt 11 ist separat von dem Filtergrundgehäuse 4 ausgebildet, jedoch mit dem Filtergrundgehäuse 4 verbunden.

Die Querschnittsform des Filterelementes 2 bzw. des Filtermediumkörpers 7 kann langgestreckt ausgeführt sein, wobei die Längsseiten beispielhaft eben und parallel zueinander verlaufen und über gekrümmte Schmalseiten verbunden sind. Es ist aber auch eine kreisrunde Querschnittsform des Filterelementes 2 und des Filtermediumkörpers 7 möglich.

Das Filterelement 2 und der Filtermediumkörper 7 weisen über die axiale Länge - bezogen auf die Mittellängsachse 15 - eine nicht-konstante Querschnittsfläche auf, die im Bereich der geschlossenen Endscheibe 9 kleiner ist als im gegenüberliegenden Bereich mit der offenen Endscheibe 10 und von der kleineren zur größeren Querschnittsfläche kontinuierlich und gleichmäßig anwächst.

Benachbart zu dem gehäuseseitigen Auslassabschnitt 11 befindet sich im Filtergrundgehäuse 4 ein radial erweiterter Ringraum 14, der einen Schmutzsammelbereich bildet und an dem ein Austragventil 13 angeordnet ist. In dem radial erweiterten Schmutzsammelbereich 14, der ringförmig ausgebildet ist, können sich abgesonderte Schmutzpartikel sammeln, die über das Austragventil 13 aus dem Filtergehäuse 3 abgeleitet werden können.

Das Austragventil 13 ist vorzugsweise als passives Ventil ausgebildet, das durch äußere Einflüsse von der üblicherweise geschlossenen Position in eine geöffnete Position verstellt werden kann, in der die Schmutzpartikel abgeleitet werden können. Es ist beispielsweise möglich, das Austragventil 13 an eine Unterdruckquelle anzuschließen, z.B. mit der Saugseite eines Kühlergebläses in einem Fahrzeug zu verbinden, so dass das Austragventil 13 bei ausreichend hohem Unterdruck geöffnet wird.

Der Schmutzsammelbereich 14 kommuniziert mit dem Aufnahmeraum 26 an der Roh- bzw. Anströmseite des Filtermediumkörpers 7. Axial befindet sich der Schmutzsammelbereich 14 benachbart zu der offen ausgebildeten Endscheibe 10 an der Abströmseite des Filterelements 2. Bezogen auf die axiale Gesamtlänge des Filterelementes 2 erstreckt sich der Schmutzsammelbereich 14 über eine axiale Teillänge, die nicht mehr als 20 % der Gesamtlänge des Filterelementes 2 beträgt. Der Schmutzsammelbereich 14 ist radial gegenüber der unmittelbar angrenzenden Gehäusewand des Filtergrundgehäuses 4 erweitert. In der axialen Mitte des Schmutzsammelbereichs 14 stoßen das Filtergrundgehäuse 4 und der Auslassabschnitt 11 des Gehäuses aneinander.

In Radialrichtung ist der Schmutzsammelbereich 14 über ein Separierungselement 27 von dem Filtermediumkörper 7 separiert, wobei das Separierungselement 27 als eine umlaufende, konisch ausgebildete Beruhigungswand 27 ausgebildet ist, die Teil des Filtergehäuses 3 ist. Die Beruhigungswand 27 bildet die radial innenliegende Begrenzungswand des Schmutzsammelbereichs 14. Die Beruhigungswand 27 läuft ringsum und liegt mit geringem Abstand zur Anström- bzw. Rohseite des Filtermediumkörpers 7. In Achsrichtung erstreckt sich die Beruhigungswand 27 von einem stirnseitigen Abschnitt des Filtergehäuses 3, insbesondere des Auslassabschnittes 11, in Höhe der Endscheibe 10 bis über die axiale Erstreckung des Schmutzsammelbereichs 14 hinaus. Die axiale Länge der Beruhigungswand 27 beträgt beispielsweise mindestens ein Viertel der axialen Gesamtlänge des Filterelementes 2. Die Beruhigungswand 27 sorgt für eine Strömungsberuhigung in diesem axialen Abschnitt im Aufnahmeraum 26 und reduziert in diesem Abschnitt die Anströmung des Filtermediumkörpers 7. Der Schmutzsammelbereich 14 ist mit dem Aufnahmeraum 26 strömungsverbunden.

Aufgrund der Strömungsberuhigung und der größeren radialen Erstreckung des Schmutzsammelbereichs 14 im Vergleich zu der unmittelbar benachbarten Gehäusewand des Filtergrundgehäuses 4 können sich Schmutzpartikel im Schmutzsammelbereich 14 ablagern, die anschließend über das Austragventil 13 abgeführt werden.

Die Beruhigungswand 27 befindet sich axial benachbart zur offenen Endscheibe 10 und erstreckt sich in Achsrichtung, von der offenen Endscheibe 10 ausgehend, über einen Teilbereich des Filtermediumkörpers 7.

An der axial gegenüberliegenden Seite befindet sich ein weiteres Separierungselement 27a in Form einer Separierungsfolie, die unmittelbar auf den Filtermediumkörper 7 aufgebracht ist. Die Separierungsfolie 27a erstreckt sich von der geschlossenen Endscheibe 9 ausgehend in Achsrichtung, so dass die Beruhigungswand 27 und die Separierungsfolie 27a sich von gegenüberliegenden Stirnseiten aus axial in Richtung der Mitte des Filtermediumkörpers 7 erstrecken. Die axiale Länge der Beruhigungswand 27 und der Separierungsfolie 27a ist zumindest annähernd gleich groß. In der Mitte zwischen den beiden Separierungselementen 27 und 27a befindet sich ein Teilabschnitt des Filtermediumkörpers 7, der frei ist von Separierungselementen und somit unmittelbar von dem zu reinigenden Rohfluid radial angeströmt werden kann.

Beide Separierungselemente 27 und 27a sorgen für eine Strömungsberuhigung des in den Anströmraum an der Anströmseite des Filtermediumkörpers einströmenden Rohfluids, wodurch es ermöglicht wird, dass sich grobe Schmutzpartikel im Ringraum 14 absetzen, die über das Austragventil 13 ausgetragen werden können. Trotz der Separierungselemente 27 und 27a kann der Filtermediumkörper 7 über seine gesamte axiale Länge und seine gesamte Anströmseite von dem Rohfluid angeströmt werden. Die Beruhigungswand 27 liegt radial auf Abstand zur Anströmseite des Filtermediumkörpers 7, wodurch ein Ringraum zwischen der Beruhigungswand 27 und der Anströmseite des Filtermediumkörpers gebildet ist, in den das Rohfluid einströmen kann.

Der Filtermediumkörper 7 ist faltenförmig ausgebildet, wobei die Längserstreckung der Falten parallel zur Längsachse 15 des Filterelements verläuft. Im Bereich der Beruhigungsfolie 27a, die unmittelbar auf den Filtermediumkörper 7 aufgebracht ist und beispielsweise mit dem Filtermediumkörper 7 verschweißt oder verklebt ist, kann das Rohfluid entlang der Falten des Filtermediumkörpers 7 ausgehend von dem Teilabschnitt des Filtermediumkörpers ohne Separierungselemente axial in den Teilbereich strömen, der von der Separierungsfolie 27a abgedeckt ist. Auf diese Weise steht auch im Bereich der Separierungsfolie 27a der Filtermediumkörper 7 für die Filtration des Rohfluids zur Verfügung.

## Patentansprüche

1. Filtereinrichtung mit einem Filterelement (2) in einem Filtergehäuse (3), mit einem ringförmigen Filtermediumkörper (7) des Filterelements (2), wobei an einer Stirnseite des Filtermediumkörpers (7) eine Endscheibe (9) angeordnet ist, wobei der Filtermediumkörper (7) einen innenliegenden Strömungsraum zur Aufnahme eines zu filtrierenden Fluids ringförmig umschließt, wobei zwischen der Außenkontur der Endscheibe (9) und der Innenseite einer Gehäusewand des Filtergehäuses (3) ein ringförmig umlaufender Strömungsweg (20) liegt, in den abschnittsweise Leitschaufeln (21) hineinragen, die an der Endscheibe (9) am Filterelement (2) befestigt sind, **dadurch gekennzeichnet, dass** ein Teil des Strömungswegs (20) von einer Blende (25) abgedeckt ist, die an der Endscheibe (9) am Filterelement (2) angeordnet ist.

2. Filtereinrichtung nach Anspruch 1, **dadurch gekennzeichnet, dass** das Filterelement (2) mit dem Filtermediumkörper (7) und der ringförmig umlaufende Strömungsweg (20) jeweils eine langgestreckte Querschnittsform aufweisen.

3. Filtereinrichtung nach Anspruch 2, **dadurch gekennzeichnet, dass** die Blende (25) eine Schmalseite des ringförmigen Strömungswegs (20) abdeckt.

4. Filtereinrichtung nach Anspruch 3, **dadurch gekennzeichnet, dass** die Blende (25) einen sich an die Schmalseite anschließenden Teil einer Längsseite des Strömungswegs (20) abdeckt.

5. Filtereinrichtung nach einem der Ansprüche 2 bis 4, **dadurch gekennzeichnet, dass** die Längsseiten des Strömungswegs (20) eben ausgebildet sind.

6. Filtereinrichtung nach einem der Ansprüche 1 bis 5, **dadurch gekennzeichnet, dass** in das Filtergehäuse (4) stromauf des Filterelements (2) und seitlich versetzt zur Längsachse (15) des Filterelements (2) eine Einströmöffnung (6) angebracht ist, wobei die Blende (25) und die Einströmöffnung (6) auf der gleichen Seite angeordnet sind.

7. Filtereinrichtung nach einem der Ansprüche 1 bis 6, **dadurch gekennzeichnet, dass** am oder benachbart zum Filtermediumkörper (7) des Filterelements (2) ein strömungsdichtes Separierungselement (27) angeordnet ist, das sich auf der Anströmseite über eine Teilfläche des Filtermediumkörper (7) erstreckt.

8. Filterelement für eine Filtereinrichtung nach einem der Ansprüche 1 bis 7, mit einem ringförmigen Filtermediumkörper (7) des Filterelements (2), mit einer Endscheibe (9) an einer Stirnseite des Filtermediumkörpers (7), wobei der Filtermediumkörper (7) einen innenliegenden Strömungsraum zur Aufnahme eines zu filtrierenden Fluids ringförmig umschließt, wobei an der Endscheibe (9) am Filterelement (2) abschnittsweise Leitschaufeln (21) befestigt sind, die in eingebautem Zustand in den ringförmig umlaufender Strömungsweg (20) hineinragen, der in eingebautem Zustand zwischen der Außenkontur der Endscheibe (9) und der Innenseite der Gehäusewand des Filtergehäuses (3) liegt, **dadurch gekennzeichnet, dass** zum Abdecken eines Teil des Strömungswegs (20) eine sich an der Endscheibe (9) radial nach außen erstreckende Blende (25) am Filterelement (2) angeordnet ist, die sich über einen Teil des Umfangs der Endscheibe (9) erstreckt.

## Claims

1. Filtering device with a filter element (2) in a filter housing (3), with an annular filter medium body (7) of the filter element (2), wherein an end disc (9) is disposed on the front face of the filter medium body (7), wherein the filter medium body (7) encircles an internal flow chamber for receiving a fluid to be filtered, wherein between the outer contour of the end disc (9) and the interior side of a housing wall of the filter housing (3) is located an annularly surrounding flow path (20), into which guide vanes (21), which are attached to the end disc (9) on the filter element (2), project sectionwise, **characterized in that** one part of the flow path (20) is covered by a cover (25), which is disposed on the end disc (9) of the filter element (2).

2. Filtering device according to claim 1, **characterized in that** the filter element (2) with the filter medium body (7) and the annularly surrounding flow path (20) each feature an elongated cross-sectional shape.

3. Filtering device according to claim 2, **characterized in that** the cover (25) covers a narrow side of the annular flow path (20).

4. Filtering device according to claim 3, **characterized in that** the cover (25) covers one part of a longitudinal side of the flow path (20) adjoining the narrow side.

5. Filtering device according to one of the claims 2 to 4, **characterized in that** the longitudinal sides of the flow path (20) have a flat design.

6. Filtering device according to one of the claims 1 to 5, **characterized in that** an inflow opening (6) is realized in the filter housing (4) upstream of the filter element (2) and laterally offset with respect to the longitudinal axis (15) of the filter element (2), wherein the cover (25) and the inflow opening (6) are disposed on the same side.

7. Filtering device according to one of the claims 1 to 6, **characterized in that** a flow-tight separating element (27), which extends on the inflow side across a partial surface of the filter medium body (7), is disposed on or adjacent to the filter medium body (7) of the filter element (2).

8. Filter element for a filtering device according to one of the claims 1 to 7, with an annular filter medium body (7) of the filter element (2), with an end disc (9) on the front face of the filter medium body (7), wherein the filter medium body (7) encircles an internal flow chamber for receiving a fluid to be filtered, wherein guide vanes (21) are attached sectionwise to the end disc (9) on the filter element (2), which guide vanes project, in the mounted state, into the annularly surrounding flow path (20), which is located, in the mounted state, between the outer contour of the end disc (9) and the interior side of the housing wall of the filter housing (3), **characterized in that**, for covering one part of the flow path (20), a radially outwards extending cover (25) on the end disc (9) is disposed on the filter element (2), which cover extends across one part of the circumference of the end disc (9).

## Revendications

1. Dispositif de filtration avec un élément filtrant (2) dans un boîtier de filtre (3), avec in corps de milieu filtrant (7) de l'élément filtrant (2), dans lequel un disque d'extrémité (9) est disposé sur une face frontale du corps de milieu filtrant (7), dans lequel le corps de milieu filtrant (7) encercle un espace d'écoulement intérieur pour recevoir un fluide à filtrer, dans lequel est disposé entre le contour extérieur du disque d'extrémité (9) et la face intérieure d'une paroi de boîtier du boîtier de filtre (3) un trajet d'écoulement (20) à périmètre annulaire où pénètrent par sections des aubes directrices (21) qui sont attachées au disque d'extrémité (9) sur l'élément filtrant (2), **caractérisé en ce qu'**une partie du trajet d'écoulement (20) est couverte d'un recouvrement (25) qui est disposé sur le disque d'extrémité (9) sur l'élément filtrant (2).

2. Dispositif de filtration selon la revendication 1, **caractérisé en ce que** l'élément filtrant (2) avec le corps de milieu filtrant (7) et le trajet d'écoulement (20) à périmètre annulaire présentent chacun une forme de la section transversale allongée.

3. Dispositif de filtration selon la revendication 2, **caractérisé en ce que** le recouvrement (25) couvre un côté étroit du trajet d'écoulement annulaire (20).

4. Dispositif de filtration selon la revendication 3, **caractérisé en ce que** le recouvrement (25) couvre une partie d'un côté longitudinal du trajet d'écoulement (20) raccordée au côté étroit.

5. Dispositif de filtration selon l'une des revendications 2 à 4, **caractérisé en ce que** les côtés longitudinaux du trajet d'écoulement (20) sont réalisés de manière plane.

6. Dispositif de filtration selon l'une des revendications 1 à 5, **caractérisé en ce qu'**une ouverture d'entrée (6) est réalisée dans le boîtier de filtre (4) en amont de l'élément filtrant (2) et décalée latéralement par rapport à l'axe longitudinal (15) de l'élément filtrant (2), dans lequel le recouvrement (25) et l'ouverture d'entrée (6) sont disposés du même côté.

7. Dispositif de filtration selon l'une des revendications 1 à 6, **caractérisé en ce qu'**un élément de séparation (27) étanche au flux, qui s'étend du côté entrée sur une surface partielle du corps de milieu filtrant (7), est disposé sur ou près du corps de milieu filtrant (7) de l'élément filtrant (2).

8. Élément filtrant pour un dispositif de filtration selon l'une des revendications 1 à 7, avec un corps de milieu filtrant annulaire (7) de l'élément filtrant (2), avec un disque d'extrémité (9) sur une face frontale du corps de milieu filtrant (7), dans lequel le corps de milieu filtrant (7) encercle un espace d'écoulement intérieur pour recevoir un fluide à filtrer, dans lequel des aubes directrices (21) sont attachées par sections sur le disque d'extrémité (9) sur l'élément filtrant (2), lesquelles aubes directrices pénètrent, en état monté, dans le trajet d'écoulement (20) à périmètre annulaire, qui se trouve, en état monté, entre le contour extérieur du disque d'extrémité (9) et la face intérieure de la paroi de boîtier et le boîtier de filtre (3), **caractérisé en ce que**, pour couvrir une partie du trajet d'écoulement (20) un recouvrement (25) s'étendant radialement vers l'extérieur sur le disque d'extrémité (9) est disposé sur l'élément filtrant (2) et s'étend sur une partie de la circonférence du disque d'extrémité (9).
